# EUROPEAN PATENT SPECIFICATION

(11) **EP 2 845 859 B1**
(45) Date of publication and mention of the grant of the patent: **11.01.2017**
(21) Application number: 12883714.3
(22) Date of filing: 09.11.2012
(51) Int. Cl.: C07F 9/655

(54) **METHOD FOR PREPARING FOSFOMYCIN AMMONIUM SALT**
VERFAHREN ZUR HERSTELLUNG VON FOSFOMYCIN-AMMONIAKSALZ
PROCÉDÉ DE PRÉPARATION DE SEL D'AMMONIUM DE FOSFOMYCINE

(30) Priority: 31.08.2012 CN 201210319523
(43) Date of publication of application: 11.03.2015
(73) Proprietor: Northeast Pharmaceutical Group Co., Ltd., Liaoning 110027 (CN)
(72) Inventor: CHEN, Fapu, Shenyang Liaoning 110027 (CN)
(74) Representative: Viering, Jentschura & Partner mbB Patent- und Rechtsanwälte
(86) International application number: PCT/CN2012/084378
(87) International publication number: WO 2014/032363

(56) References cited:
- EP-A1- 1 762 573
- CN-A- 1 544 440
- CN-A- 101 928 300
- CN-A- 102 351 902
- US-A- 5 191 094

## Description

### Field of invention

The present invention specifically relates to a method for preparing fosfomycin ammonium salt.

### Prior arts

Fosfomycin trometamol is a white crystalline powder, having a brand name of Monuril, a chemical name of (1R,2S)-(1,2-epoxypropyl) phosphoric acid 2-amino-2-(hydroxymethyl)-1,3-propanediol salt (1:1), a molecular formula of C₄H₁₁NO₃.C₃H₇O₄P, a molecular weight of 259.19, and a molecular structure as below: 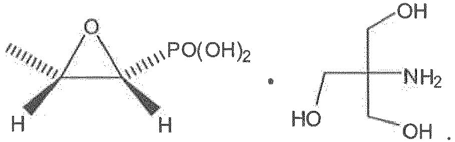 Fosfomycin trometamol is a kind of drug which has been used in the treatment of urinogenital infection for a long time, and the drug was disclosed for the first time in patent EP 27957 (Zambon, 1981).

Some processing methods in which fosfomycin phenylethylamine (CAS No. 25383-07-7, the structure is shown below) was used as reactant have been well known.

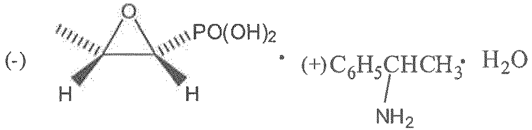

A reaction of fosfomycin bis-tromethamine (the structure is shown below) and *p*-toluenesulfonic acid in ethanol has been described in the patent- EP 27597. A method for preparing fosfomycin bis-tromethamine has been disclosed in patent US 4727065 (Zambon, 1988).

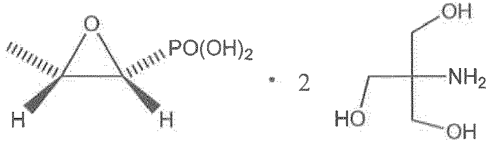

A process for preparing fosfomycin trometamol has been disclosed in patent US 5162309 (Zambon, 1992), which was also prepared by fosfomycin bis-tromethamine and methyl sulfonic acid.

A method that fosfomycin calcium reacted with tromethamine and oxalic acid has been disclosed in CN 1060657 (1992). The fosfomycin calcium is prepared from fosfomycin phenylethylamine in the yield of 89%.

A process that in the presence of carboxylic acid, the exchanging reaction was carried out between fosfomycin disodium salt and tromethamine salt for preparing fosfomycin trometamol has been disclosed in EP 1762573 (2007).

At present, in China, fosfomycin trometamol is prepared by the method that going through an acidic ion-exchanging resin with fosfomycin phenylethylamine at -40°C and the yield is 72∼82% (CN 1544440, 2004; CN 1060470, 1992).

A one-step process that fosfomycin phenylethylamine reacted with tromethamine, and *p*-toluenesulfonic acid for preparing fosfomycin trometamol has also been disclosed in US 5162309 and the yield is 74.6%.

EP 1 762 573 A1 discloses the reaction of disodium fosfomycin in methanol with oxalic acid dihydrate and tromethamine in methanol to give fosfomycin trometamol.

Therefore, a process for preparing fosfomycin trometamol conveniently in a high yield and avoiding forming glycol through epoxy ring opening is required.

### Content of the present invention

The technical problem to be solved in the present invention is for overcoming the defects, such as complicated route and a low yield etc., in the existing methods for preparing fosfomycin trometamol, and provides a method for preparing fosfomycin trometamol. The method of the present invention can be achieved by only a one-step reaction, does not require a low-temperature ion-exchange column, has a high yield, low costs, fewer three-wastes, mild reaction conditions, and low energy consumption, and is convenient in operating and suitable for industrialization.

The present invention provides a method for preparing fosfomycin trometamol, comprising the following steps of: in an organic solvent, reacting fosfomycin phenylethylamine with an isocyanate, an isothiocyanate, a ketene, a dimer of an isocyanate, a dimer of an isothiocyanate, or a dimer of a ketene, and tromethamine;
or, in an organic solvent, reacting fosfomycin bis-tromethamine with an isocyanate, an isothiocyanate, a ketene, a dimer of an isocyanate, a dimer of an isothiocyanate, or a dimer of ketene (such as diketene);
wherein, the isothiocyanate is R¹-N=C=S or S=C=N-R⁵-N=C=S, the isocyanate is R²-N=C=O or O=C=N-R⁶-N=C=O, the ketene is 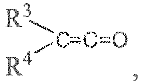 R¹ and R² is independently selected from a substituted (the substituent group is halogen, C₁-C₃ alkyl, C₁∼C₃ alkoxy, C₃∼C₆ cycloalkyl, or C₆∼C₁₀ aryl) or unsubstituted C₁∼C₈ alkyl (preferably C₁∼C₃ alkyl, such as methyl), a substituted (the substituent group is halogen, C₁∼C₃ alkyl, C₁∼C₃ alkoxy, C₃∼C₆ cycloalkyl, or C₆∼C₁₀ aryl) or unsubstituted C₃∼C₈ cycloalkyl (preferably cyclohexyl), or a substituted (the substituent group is halogen, C₁∼C₃ alkyl, C₁∼C₃ alkoxy, C₃~C₆ cycloalkyl, or C₆∼C₁₀ aryl) or unsubstituted C₆∼C₁₀ aryl (preferably phenyl), R³ and R⁴ is independently selected from H, a substituted (the substituent group is halogen, C₁∼C₃ alkyl, C₁∼C₃ alkoxy, C₃∼C₆ cycloalkyl, or C₆∼C₁₀ aryl) or unsubstituted C₁∼C₈ alkyl (preferably C₁∼C₃ alkyl, such as methyl), a substituted (the substituent group is halogen, C₁∼C₃ alkyl, C₁∼C₃ alkoxy, C₃∼C₆ cycloalkyl, or C₆∼C₁₀ aryl) or unsubstituted C₃∼C₈ cycloalkyl (preferably cyclohexyl), or a substituted (the substituent group is halogen, C₁∼C₃ alkyl, C₁∼C₃ alkoxy, C₃∼C₆ cycloalkyl, or C₆∼C₁₀ aryl) or unsubstituted C₆∼C₁₀ aryl (preferably phenyl); R⁵ and R⁶ is independently selected from a C₂∼C₆ alkylene (such as ethylene) or a C₆∼C₁₀ arylene (for example phenylene, such as *p*-phenylene diisocyanate involved in the embodiment).

In the present invention, R¹ or R² is preferably selected from a substituted or unsubstituted C₁∼C₃ alkyl (preferably methyl), a C₆∼C₁₀ aryl (preferably phenyl), a C₃∼C₈ cycloalkyl (preferably cyclohexyl), wherein, the substituted group on the substituted C₁∼C₃ alkyl is a C₆∼C₁₀ aryl (preferably phenyl). R³ or R⁴ is preferably selected from H or a C₆∼C₁₀ aryl (preferably phenyl). R⁵ or R⁶ is preferably selected from a C₆∼C₁₀ arylene (for example phenylene, such as *p*-phenylene diisocyanate involved in the embodiment).

In the present invention, the method is preferably any one of the following methods:
Method 1: adding an isocyanate, an isothiocyanate, a ketene, a dimer of an isocyanate, a dimer of an isothiocyanate, or a dimer of a ketene dropwise into a mixture of fosfomycin phenylethylamine and tromethamine in an organic solvent, and reacting;
Method 2: adding an isocyanate, an isothiocyanate, a ketene, a dimer of an isocyanate, a dimer of an isothiocyanate, or a dimer of a ketene dropwise into the suspension mixture of fosfomycin bis-tromethamine in an organic solvent, and reacting.

In the present invention, the organic solvent is selected from a commonly used non-amine organic solvent in the art, particularly prefers an alcohol solvent, and the alcohol solvent is preferably methanol and/or ethanol. The dosage of the organic solvent has no special restriction, in method 1, the ratio of the volume of the organic solvent to the mass of fosfomycin phenylethylamine is preferably 8∼10ml/g; in method 2, the ratio of the volume of the organic solvent to the mass of fosfomycin bis-tromethamine is preferably 6∼8ml/g.

In the present invention, the molar equivalent (eqv.) ratio of the isocyanate, the isothiocyanate, the ketene, the dimer of an isocyanate, the dimer of an isothiocyanate, or the dimer of a ketene to the fosfomycin phenylethylamine is preferably 0.9:1∼2:1, more preferably 0.9:1∼1.6:1; the molar ratio of tromethamine to fosfomycin phenylethylamine is preferably 0.9:1∼1.3:1, more preferably 0.95:1∼1.2:1.

In the present invention, the molar equivalent (eqv.) ratio of the isocyanate, the isothiocyanate, the ketene, the dimer of an isocyanate, the dimer of an isothiocyanate, or the dimer of a ketene to fosfomycin bis-tromethamine is preferably 0.9:1∼2:1, more preferably 0.9:1∼1.6:1.

In the method of the present invention, reaction temperature can be -5°C∼60°C, particularly prefers -5°C∼40°C. In method 1, preferably, temperature during the dropping process is -5°C∼35°C; after dropping, the temperature can be appropriately raised, and the reaction continues at a temperature of not higher than 45 °C.

In the method of the present invention, reaction time can be determined by detecting whether the reactant reacts completely or whether the reaction is no longer proceeding with common detection methods (such as TLC, or HPLC). The reaction time is generally between 0.5∼48 hours, and with the raise of the reaction temperature (15∼40°C), the reaction can be accelerated and the reaction time can be shorten to 0.5∼16 hours.

In the method of the present invention, when the reaction finishes, the product can be obtained through simple post-processing. For example, the post-processing can comprise the following steps of:

Concentrating reaction solution, evaporating to remove the solvent (such as methanol), then adding another non-amine organic solvent (the organic solvent can be dichloromethane, ethyl acetate or ether, preferably ethanol), cooling, filtering, washing, drying, and then pure product can be obtained. If ethanol is used as the solvent for reaction, it is not necessary to evaporate ethanol, the product can be directly obtained through cooling, filtering, washing and drying. However, it also can be treated according to the post-processing above that evaporating the ethanol and then adding another common non-amine organic solvent. Wherein, the solvent used for washing is common non-methanol and non-amine organic solvent, preferably ethanol. The condition for drying can be under vacuum, for example, drying under vacuum at 45 °C .

In the present invention, the ultimate yield of method 1 (fosfomycin phenylethylamine as the reactant) can reach 70%∼86%, and the ultimate yield of method 2 (fosfomycin bis-tromethamine as the reactant) can reach 76%∼90%.

The mentioned optimized conditions can be optionally combined without departing from the general knowledge in this field to obtain preferred embodiments.

Unless otherwise indicated, the reagents and materials used herein can be commercially available.

The positive progresses of the present invention are: the method of the present invention can be achieved by only a one-step reaction, does not require a low-temperature ion-exchange column, has a high yield, low costs, fewer three-wastes, mild reaction conditions, and low energy consumption, and is convenient in operating and suitable for industrialization.

### Detailed description of the preferred embodiment

Then the present invention is further illustrated by the following embodiments, but is not limited by the following embodiments. In the following embodiments, the experimental methods without specific conditions can be carried out by conventional methods and conditions.

In the following embodiments, room temperature refers to 10∼30°C.

### Embodiment 1

In a 500mL three-necked flask, were added fosfomycin phenylethylamine (23.35g, 84.2mmol), tromethamine (10.20g, 84.2mmol) and 170g methanol (215mL), stirring at room temperature for 15 min, then methyl isocyanate (4.80g, 84.2mmol) (CAS number is 624-83-9) was added dropwise for about 5 min, temperature was raised to 33°C, stirring for 30 min, and the methanol was removed by vacuum-rotary evaporation, 200g ethanol was added, then cooling to 0°C, filtering, washing with 30g ethanol, drying under vacuum at 45°C to give 18.73g white solid in the yield of 85.8%. m.p. 119∼121°C, ¹H NMR(D₂O):(ppm)= 1.33 (d, 3H, CH₃), 3.20-2.79 (m, 2H, CH), 3.57 (s, 6H, CH₂).

### Embodiment 2

In a 500mL three-necked flask, were added fosfomycin bis-tromethamine (32.03g, 84.2mmol) and 170g methanol, stirring at room temperature for 15 min, then methyl isocyanate (4.80g, 84.2mmol) was added dropwise for about 5 min, stirring for 30 min at room temperature, and the methanol was removed by vacuum-rotary evaporation, 200g ethanol was added, cooling to 0°C, filtering, washing with 30g ethanol, drying under vacuum at 45 °C to give 19.65g white solid in the yield of 90.0%. m.p. 119∼121°C.

### Embodiment 3

In a 500mL three-necked flask, were added fosfomycin phenyl ethyl amine (23.35g, 84.2mmol), tromethamine (10.20g, 84.2mmol) and 170g methanol (215mL), stirring at room temperature for 15 min, then phenethyl isocyanate (12.39g, 84.2mmol) (CAS number is 1943-82-4) was added dropwise for about 8 min, temperature was raised to 33°C, stirring for 30 min, and the methanol was removed by vacuum-rotary evaporation, 200g ethanol was added, cooling to 0°C, filtering, washing with 30g ethanol, drying under vacuum at 45 °C to give 18.32g white solid in the yield of 83.9%. m.p. 119∼121°C.

### Embodiment 4

In a 500mL three-necked flask, were added fosfomycin bis-tromethamine (32.03g, 84.2mmol) and 170g methanol, stirring at room temperature for 15 min, then phenethyl isocyanate (12.39g, 84.2mmol) was added dropwise for about 8 min, stirring for 30 min at room temperature, and the methanol was removed by vacuum-rotary evaporation, 200g ethanol was added, cooling to 0°C , filtering, washing with 30g ethanol, drying under vacuum at 45°C to give 19.43g white solid in the yield of 89.0%. m.p. 119∼121°C.

### Embodiment 5

In a 500mL three-necked flask, were added fosfomycin phenylethylamine (23.35g, 84.2mmol), tromethamine (10.20g, 84.2mmol) and 170g methanol (215mL), stirring at room temperature for 15 min, then cyclohexyl isocyanate (10.54g, 84.2mmol) (CAS number is 3173-53-3) was added dropwise for about 8 min, temperature was raised to 33°C, then stirring for 30 min, and the methanol was removed by vacuum-rotary evaporation , 200g ethanol was added, cooling to 0°C, filtering, washing with 30g ethanol, drying under vacuum at 45 °C to give 18.82g white solid in the yield of 86.2%. m.p. 119∼121°C .

### Embodiment 6

In a 500mL three-necked flask, were added fosfomycin bis-tromethamine (32.03g, 84.2mmol) and 170g methanol, stirring at room temperature for 15 min, then cyclohexyl isocyanate (10.54g, 84.2mmol) was added dropwise for 8 min, then stirring for 30 min at room temperature, and the methanol was removed by vacuum-rotary evaporation, 200g ethanol was added, cooling to 0 °C , filtering, washing with 30g ethanol, drying under vacuum at 45°C to give 19.75g white solid, in the yield of 90.5%. m.p. 119∼121°C.

### Embodiment 7

In a 500mL three-necked flask, were added fosfomycin phenylethylamine (23.35g, 84.2mmol), tromethamine (10.20g, 84.2mmol) and 170g methanol (215mL), stirring at room temperature for 15 min, then phenyl isocyanate (10.03g, 84.2mmol) (CAS number is 103-71-9) was added dropwise for about 8 min, and temperature was raised to 33°C, then stirring for 30 min, the methanol was removed by vacuum-rotary evaporation, 200g ethanol was added, cooling to 0°C, filtering, washing with 30g ethanol, drying under vacuum at 45°C to give 18.70g white solid in the yield of 85.7%. m.p. 119∼121°C.

### Embodiment 8

In a 500mL three-necked flask, were added fosfomycin bis-tromethamine (32.03g, 84.2mmol) and 170g methanol, stirring at room temperature for 15 min, then phenyl isocyanate (10.03g, 84.2mmol) was added dropwise for 8 min, then stirring for 30 min at room temperature, the methanol was removed by vacuum rotary evaporation, 200g ethanol was added, cooling to 0°C, filtering, washing with 30g ethanol, drying under vacuum at 45 °C to give 19.80g white solid in the yield of 90.7%. m.p. 119∼121°C.

### Embodiment 9

In a 500mL three-necked flask, were added fosfomycin phenylethylamine (23.35g, 84.2mmol), tromethamine (10.20g, 84.2mmol) and 170g methanol (215mL), stirring at room temperature for 15 min, then *p*-phenylene diisocyanate (6.74g, 42.1mmol) (CAS number is 104-49-4) was added dropwise for about 5 min, and temperature was raised to 33°C, then stirring for 30 min, the methanol was removed by vacuum rotary evaporation, 200g ethanol was added, cooling to 0°C, filtering, washing with 30g ethanol, drying under vacuum at 45 °C to obtain 18.11 g white solid in the yield of 83.0%. m.p. 117∼120°C.

### Embodiment 10

In a 500mL three-necked flask, were added fosfomycin bis-tromethamine (32.03g, 84.2mmol) and 170g methanol, stirring at room temperature for 15 min, then *p*-phenylene diisocyanate (6.74g, 42.1mmol) was added dropwise for about 5 min, stirring for 30 min at room temperature, the methanol was removed by vacuum rotary evaporation, 200g ethanol was added, cooling to 0°C, filtering, washing with 30g ethanol, drying under vacuum at 45 °C to give 19.02g white solid in the yield of 87.1%. m.p. 118∼121°C.

### Embodiment 11

In a 500mL three-necked flask, were added fosfomycin phenylethylamine (23.35g, 84.2mmol), tromethamine (10.20g, 84.2mmol) and 170g methanol (215mL), stirring at room temperature for 15 min, then methyl isothiocyanate (6.16g, 84.2mmol) (CAS number is 556-61-6) was added dropwise for about 5 min, and temperature was raised to 40°C, then stirring for 60 min, the methanol was removed by vacuum rotary evaporation, 200g ethanol was added, cooling to 0°C, filtering, washing with 30g ethanol, drying under vacuum at 45 °C to give 17.06g white solid in the yield of 78.2%. m.p. 117∼120°C.

### Embodiment 12

In a 500mL three-necked flask, were added fosfomycin bis-tromethamine (32.03g, 84.2mmol) and 170g methanol, stirring at room temperature for 15 min, then methyl isothiocyanate (6.16g, 84.2mmol) was added dropwise for 5 min, and temperature was raised to 40°C, then stirring for 60 min, the methanol was removed by vacuum rotary evaporation, 200g ethanol was added, cooling to 0°C, filtering, washing with 30g ethanol, drying under vacuum at 45°C to give 18.17g white solid in the yield of 83.2%, m.p. 117∼120°C.

### Embodiment 13

In a 500mL three-necked flask, were added fosfomycin phenylethylamine (23.35g, 84.2mmol), tromethamine (10.20g, 84.2mmol) and 170g methanol (215mL), stirring at room temperature for 15 min, then diketene (C₄H₄O₂,CAS number is 674-82-8) (7.08g, 84.2mmol) was added dropwise for about 8 min, and temperature was raised to 33°C, then stirring for 30 min, the methanol was removed by vacuum rotary evaporation, 200g ethanol was added, cooling to 0°C, filtering, washing with 30g ethanol, drying under vacuum at 45 °C to give 15.32g white solid in the yield of 70.2%. m.p. 116∼120°C.

### Embodiment 14

In a 500mL three-necked flask, were added fosfomycin bis-tromethamine (32.03g, 84.2mmol) and 170g methanol, stirring at room temperature for 15 min, then diketene (7.08g, 84.2mmol) was added dropwise for 8 min, then stirring for 30 min, the methanol was removed by vacuum rotary evaporation , 200g ethanol was added, cooling to 0°C, filtering, washing with 30g ethanol, drying under vacuum at 45°C to give 16.63g white solid in the yield of 76.2%, m.p. 116∼120°C.

### Embodiment 15

In a 500mL three-necked flask, were added fosfomycin phenylethylamine (23.35g, 84.2mmol), tromethamine (10.20g, 84.2mmol) and 170g methanol (215mL), stirring at room temperature for 15 min, then diphenylketene (CAS number is 525-06-4) (16.35g, 84.2mmol) was added dropwise for about 8 min, and temperature was raised to 33°C, then stirring for 30 min, the methanol was removed by vacuum rotary evaporation, 200g ethanol was added, cooling to 0°C, filtering, washing with 30g ethanol, drying under vacuum at 45 °C to give 15.67g white solid in the yield of 71.8%. m.p. 117∼120°C.

### Embodiment 16

In a 500mL three-necked flask, were added fosfomycin bis-tromethamine (32.03g, 84.2mmol) and 170g methanol, stirring at room temperature for 15 min, then diphenylketene (16.35g, 84.2mmol) was added dropwise for 8 min, then stirring for 30 min, the methanol was removed by vacuum rotary evaporation, 200g ethanol was added, cooling to 0°C, filtering, washing with 30g ethanol, drying under vacuum at 45°C to give 17.39g white solid in the yield of 79.7%. m.p. 117∼120°C.

## Claims

1. A method for preparing fosfomycin ammonium salt, comprising:
in a non-amine organic solvent, reacting fosfomycin phenylethylamine with an isocyanate, an isothiocyanate, a ketene, a dimer of an isocyanate, a dimer of an isothiocyanate, or a dimer of a ketene, and tromethamine;
or, in a non-amine organic solvent, reacting fosfomycin bis-tromethamine with an isocyanate, an isothiocyanate, a ketene, a dimer of an isocyanate, a dimer of an isothiocyanate, or a dimer of ketene;
wherein, the isothiocyanate is R¹-N=C=S or S=C=N-R⁵-N=C=S, the isocyanate is R²-N=C=O or O-C=N-R⁶-N=C=O, the ketene is 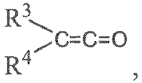 R¹ and R² is independently a substituted or unsubstituted C₁∼C₈ alkyl, a substituted or unsubstituted C₃∼C₈ cycloalkyl, or a substituted or unsubstituted C₆∼C₁₀ aryl; R³ and R⁴ is independently H, a substituted or unsubstituted C₁∼C₈ alkyl, a substituted or unsubstituted C₃∼C₈ cycloalkyl, or a substituted or unsubstituted C₆∼C₁₀ aryl; R⁵ and R⁶ is independently a C₂∼C₆ alkylene or a C₆∼C₁₀ arylene; and if substituted, the substituent group on the substituted C₁∼C₈ alkyl, substituted C₃∼C₈ cycloalkyl, or substituted C₆∼C₁₀ aryl is a halogen, a C₁∼C₃ alkyl, a C₁∼C₃ alkoxy, a C₃∼C₆ cycloalkyl, or a C₆∼C₁₀ aryl; the fosfomycin ammonium salt is fosfomycin trometamol.

2. The method according to claim 1, wherein when R¹ and R² is independently a substituted or unsubstituted C₁∼C₈ alkyl, the C₁∼C₈ alkyl is C₁∼C₃ alkyl;
and/or, when R³ and R⁴ is independently a substituted or unsubstituted C₁∼C₈ alkyl, the C₁∼C₈ alkyl is C₁∼C₃ alkyl.

3. The method according to claim 2, wherein the C₁∼C₃ alkyl is methyl.

4. The method according to claim 1, wherein when R¹ and R² is independently a substituted or unsubstituted C₃∼C₈ cycloalkyl, the C₃∼C₈ cycloalkyl is cyclohexyl;
and/or, when R³ and R⁴ is independently a substituted or unsubstituted C₃∼C₈ cycloalkyl, the C₃∼C₈ cycloalkyl is cyclohexyl;
and/or, when R⁵ and R⁶ is independently a C₂∼C₆ alkylene, the C₂∼C₆ alkylene is ethylene.

5. The method according to claim 1, wherein, when R¹ and R² is independently a substituted or unsubstituted C₆∼C₁₀ aryl, the C₆∼C₁₀ aryl is phenyl;
and/or, when R³ and R⁴ is independently a substituted or unsubstituted C₆∼C₁₀ aryl, the C₆∼C₁₀ aryl is phenyl;
and/or, when R⁵ and R⁶ is independently a C₆∼C₁₀ arylene, the C₆∼C₁₀ arylene is phenylene.

6. The method according to claim 1, wherein the method is any one of the following methods:
Method 1: adding an isocyanate, an isothiocyanate, a ketene, a dimer of an isocyanate, a dimer of an isothiocyanate, or a dimer of a ketene dropwise into the mixture of fosfomycin phenylethylamine and tromethamine in a non-amine organic solvent, and reacting;
Method 2: adding an isocyanate, an isothiocyanate, a ketene, a dimer of an isocyanate, a dimer of an isothiocyanate, or a dimer of a ketene dropwise into the suspension mixture of fosfomycin bis-tromethamine in a non-amine organic solvent, and reacting.

7. The method according to any one of claims 1-6, wherein the non-amine organic solvent is an alcohol solvent.

8. The method according to claim 7, wherein the alcohol solvent is methanol and/or ethanol.

9. The method according to any one of claims 1∼6, wherein the molar equivalent ratio of the isocyanate, the isothiocyanate, the ketene, the dimer of an isocyanate, the dimer of an isothiocyanate, or the dimer of a ketene to fosfomycin phenylethylamine is 0.9:1-2:1; the molar ratio of tromethamine to fosfomycin phenylethylamine is 0.9:1∼1.3:1.

10. The method according to claim 9, wherein the molar equivalent ratio of the isocyanate, the isothiocyanate, the ketene, the dimer of an isocyanate, the dimer of an isothiocyanate, or the dimer of a ketene to fosfomycin phenylethylamine is 0.9:1∼1.6:1; the molar ratio of tromethamine to fosfomycin phenylethylamine is 0.95:1∼1.2:1.

11. The method according to any one of claims 1-6, wherein the molar equivalent ratio of the isocyanate, the isothiocyanate, the ketene, the dimer of an isocyanate, the dimer of an isothiocyanate, or the dimer of a ketene to fosfomycin bis-tromethamine is 0.9:1-2:1.

12. The method according to claim 11, wherein the molar equivalent ratio of the isocyanate, the isothiocyanate, the ketene, the dimer of an isocyanate, the dimer of an isothiocyanate, or the dimer of a ketene to fosfomycin bis-tromethamine is 0.9:1∼1.6:1.

13. The method according to any one of claims 1∼6, wherein reaction temperature is -5 °C ∼ 60 °C .

14. The method according to claim 13, wherein the reaction temperature is -5°C ∼40°C.

15. The method according to any one of claims 1∼6, wherein after the reaction finishes, the post-processing is carried out as follows:
concentrating reaction solution, evaporating to remove the solvent, then adding another non-amine organic solvent, cooling, filtering, washing, drying to obtain pure product;
or, if ethanol is used as the solvent when reacting, it is not necessary to evaporate ethanol, the product is directly obtained by cooling reaction solution, filtering, washing and drying.

## Patentansprüche

1. Ein Verfahren zur Herstellung von Fosfomycin-Ammoniumsalz, umfassend:
Umsetzen von Fosfomycin-Phenylethylamin mit einem Isocyanat, einem Isothiocyanat, einem Keten, einem Dimer eines Isocyanats, einem Dimer eines Isothiocyanats oder einem Dimer eines Ketens und Tromethamin in einem nicht-Amin organischen Lösemittel;
oder Umsetzen von Fosfomycin-bis-Tromethamin mit einem Isocyanat, einem Isothiocyanat, einem Keten, einem Dimer eines Isocyanats, einem Dimer eines Isothiocyanats oder einem Dimer eines Ketens in einem nicht-Amin organischen Lösemittel;
wobei das Isothiocyanat R¹-N=C=S oder S=C=N-R⁵-N=C=S ist, das Isocyanat R²-N=C=O oder O=C=N-R⁶-N=C=O ist, das Keten 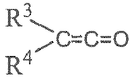 ist, R¹ und R² unabhängig ein substituiertes oder unsubstituiertes C₁∼C₈ Alkyl, ein substituiertes oder unsubstituiertes C₃∼C₈ Cycloalkyl oder ein substituiertes oder unsubstituiertes C₆∼C₁₀ Aryl ist; R³ und R⁴ unabhängig H, ein substituiertes oder unsubstituiertes C₁∼C₈ Alkyl, ein substituiertes oder unsubstituiertes C₃∼C₈ Cycloalkyl oder ein substituiertes oder unsubstituiertes C₆∼C₁₀ Aryl ist; R⁵ und R⁶ unabhängig ein C₂∼C₆ Alkylen oder ein C₆∼C₁₀ Arylen ist; und wenn substituiert, die Substitutionsgruppe an dem substituiertem C₁∼C₈ Alkyl, substituiertem C₃∼C₈ Cycloalkyl oder substituiertem C₆∼C₁₀ Aryl ein Halogen, ein C₁∼C₃ Alkyl, ein C₁∼C₃ Alkoxy, ein C₃∼C₆ Cycloalkyl oder ein C₆∼C₁₀ Aryl ist; das Fosfomycin-Ammoniumsalz Fosfomycin-Trometamol ist.

2. Das Verfahren gemäß Anspruch 1, wobei, wenn R¹ und R² unabhängig ein substituiertes oder unsubstituiertes C₁∼C₈ Alkyl ist, das C₁∼C₈ Alkyl C₁∼C₃ Alkyl ist;
und/oder, wenn R³ und R⁴ unabhängig ein substituiertes oder unsubstituiertes C₁∼C₈ Alkyl ist, das C₁∼C₈ Alkyl C₁∼C₃ Alkyl ist.

3. Das Verfahren gemäß Anspruch 2, wobei das C₁∼C₃ Alkyl Methyl ist.

4. Das Verfahren gemäß Anspruch 1, wobei, wenn R¹ und R² unabhängig ein substituiertes oder unsubstituiertes C₃∼C₈ Cycloalkyl ist, das C₃∼C₈ Cycloalkyl Cyclohexyl ist;
und/oder, wenn R³ und R⁴ unabhängig ein substituiertes oder unsubstituiertes C₃∼C₈ Cycloalkyl ist, das C₃∼C₈ Cycloalkyl Cyclohexyl ist;
und/oder, wenn R⁵ und R⁶ unabhängig ein C₂∼C₆ Alkylen ist, das C₂∼C₆ Alkylen Ethylen ist.

5. Das Verfahren gemäß Anspruch 1, wobei, wenn R¹ und R² unabhängig ein substituiertes oder unsubstituiertes C₆∼C₁₀ Aryl ist, das C₆∼C₁₀ Aryl Phenyl ist; und/oder, wenn R³ und R⁴ unabhängig ein substituiertes oder unsubstituiertes C₆∼C₁₀ Aryl ist, das C₆∼C₁₀ Aryl Phenyl ist;
und/oder, wenn R⁵ und R⁶ unabhängig ein C₆∼C₁₀ Arylen ist, das C₆∼C₁₀ Arylen Phenylen ist.

6. Das Verfahren gemäß Anspruch 1, wobei das Verfahren eines der folgenden Verfahren ist:
Verfahren 1: Tropfenweises Zugeben eines Isocyanats, eines Isothiocyanats, eines Ketens, eines Dimers eines Isocyanats, eines Dimers eines Isothiocyanats oder eines Dimers eines Ketens in die Mischung von Fosfomycin-Phenylethylamin und Tromethamin in einem nicht-Amin organischen Lösemittel und Umsetzen.
Verfahren 2: Tropfenweises Zugeben eines Isocyanats, eines Isothiocyanats, eines Ketens, eines Dimers eines Isocyanats, eines Dimers eines Isothiocyanats oder eines Dimers eines Ketens in die Suspensionsmischung von Fosfomycin-bis-Tromethamin in einem nicht-Amin organischen Lösemittel und Umsetzen.

7. Das Verfahren gemäß einem der Ansprüche 1∼6, wobei das nicht-Amin organische Lösemittel ein Alkohollösemittel ist.

8. Das Verfahren gemäß Anspruch 7, wobei das Alkohollösemittel Methanol und/oder Ethanol ist.

9. Das Verfahren gemäß einem der Ansprüche 1∼6, wobei das molare Äquivalenzverhältnis des Isocyanats, des Isothiocyanats, des Ketens, des Dimers eines Isocyanats, des Dimers eines Isothiocyanats oder des Dimers eines Ketens zu Fosfomycin-Phenylethylamin 0,9:1-2:1 ist; das molare Verhältnis von Tromethamin zu Fosfomycin-Phenylethylamin 0,9:1∼1,3:1 ist.

10. Das Verfahren gemäß Anspruch 9, wobei das molare Äquivalenzverhältnis des Isocyanats, des Isothiocyanats, des Ketens, des Dimers eines Isocyanats, des Dimers eines Isothiocyanats oder des Dimers eines Ketens zu Fosfomycin-Phenylethylamin 0,9:1∼1,6:1 ist; das molare Verhältnis von Tromethamin zu Fosfomycin-Phenylethylamin 0,95:1∼1,2:1 ist.

11. Das Verfahren gemäß einem der Ansprüche 1-6, wobei das molare Äquivalenzverhältnis des Isocyanats, des Isothiocyanats, des Ketens, des Dimers eines Isocyanats, des Dimers eines Isothiocyanats oder des Dimers eines Ketens zu Fosfomycin-bis-Tromethamin 0,9:1-2:1 ist.

12. Das Verfahren gemäß Anspruch 11, wobei das molare Äquivalenzverhältnis des Isocyanats, des Isothiocyanats, des Ketens, des Dimers eines Isocyanats, des Dimers eines Isothiocyanats oder des Dimers eines Ketens zu Fosfomycin-bis-Tromethamin 0,9:1∼1,6:1 ist.

13. Das Verfahren gemäß einem der Ansprüche 1-6, wobei die Reaktionstemperatur -5°C∼60°C ist.

14. Das Verfahren gemäß Anspruch 13, wobei die Reaktionstemperatur -5°C∼40°C ist.

15. Das Verfahren gemäß einem der Ansprüche 1-6, wobei, nachdem die Reaktion fertig ist, die Nachbearbeitung wie folgt durchgeführt wird:
Konzentrieren der Reaktionslösung, Verdampfen, um das Lösemittel zu entfernen, anschließend Zugeben eines anderen nicht-Amin organischen Lösemittels, Kühlen, Filtrieren, Waschen, Trocknen, um reines Produkt zu erhalten;
oder, wenn Ethanol als das Lösemittel während des Umsetzens verwendet wird, ist es nicht notwendig, Ethanol zu verdampfen, das Produkt wird direkt durch Kühlen der Reaktionslösung, Filtern, Waschen und Trocknen erhalten.

## Revendications

1. Procédé pour préparer un sel d'ammonium de fosfomycine, comprenant :
dans un solvant organique non-amine, la réaction de phényléthylamine de fosfomycine avec un isocyanate, un isothiocyanate, un cétène, un dimère d'un isocyanate, un dimère d'un isothiocyanate, ou un dimère d'un cétène, et de la trométhamine ;
ou, dans un solvant organique non-amine, la réaction de bis-trométhamine de fosfomycine avec un isocyanate, un isothiocyanate, un cétène, un dimère d'un isocyanate, d'un dimère d'un isothiocyanate, ou un dimère d'un cétène ;
dans lequel l'isothiocyanate est R¹-N=C=S ou S=C=N-R⁵-N=C=S, l'isocyanate est R²-N=C=O ou O=C=N-R⁶-N=C=O, le cétène est 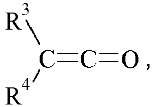 R¹ et R² sont indépendamment un alkyle en C₁ à C₈ substitué ou non substitué, un cycloalkyle en C₃ à C₈ substitué ou non substitué, ou un aryle en C₆ à C₁₀ substitué ou non substitué ; R³ et R⁴ sont indépendamment H, un alkyle en C₁ à C₈ substitué ou non substitué, un cycloalkyle en C₃ à C₈ substitué ou non substitué, ou un aryle en C₆ à C₁₀ substitué ou non substitué ; R⁵ et R⁶ sont indépendamment un alkylène en C₂ à C₆ ou un arylène en C₆ à C₁₀ ; et s'il est substitué, le groupe substituant sur l'alkyle en C₁ à C₈ substitué, le cycloalkyle en C₃ à C₈ substitué ou l'aryle en C₆ à C₁₀ substitué est un halogène, un alkyle en C₁ à C₃, un alcoxy en C₁ à C₃, un cycloalkyle en C₃ à C₆ ou un aryle en C₆ à C₁₀ ; le sel d'ammonium de fosfomycine étant le fosfomycine trométamol.

2. Procédé selon la revendication 1, dans lequel, quand R¹ et R² sont indépendamment un alkyle en C₁ à C₈ substitué ou non substitué, l'alkyle en C₁ à C₈ est un alkyle en C₁ à C₃ ;
et/ou, quand R³ et R⁴ sont indépendamment un alkyle en C₁ à C₈ substitué ou non substitué, l'alkyle en C₁ à C₈ est un alkyle en C₁ à C₃ ;

3. Procédé selon la revendication 2, dans lequel l'alkyle en C₁ à C₃ est le méthyle.

4. Procédé selon la revendication 1, dans lequel, quand R¹ et R² sont indépendamment un cycloalkyle en C₃ à C₈ substitué ou non substitué, le cycloalkyle en C₃ à C₈ est le cyclohexyle ;
et/ou, quand R³ et R⁴ sont indépendamment un cycloalkyle en C₃ à C₈ substitué ou non substitué, le cycloalkyle en C₃ à C₈ est le cyclohexyle ;
et/ou, quand R⁵ et R⁶ sont indépendamment un alkylène en C₂ à C₆, l'alkylène en C₂ à C₆ est l'éthylène.

5. Procédé selon la revendication 1, dans lequel, quand R¹ et R² sont indépendamment un aryle en C₆ à C₁₀ substitué ou non substitué, l'aryle en C₆ à C₁₀ est le phényle ;
et/ou, quand R³ et R⁴ sont indépendamment un aryle en C₆ à C₁₀ substitué ou non substitué, l'aryle en C₆ à C₁₀ est le phényle ;
et/ou, quand R⁵ et R⁶ sont indépendamment un arylène en C₆ à C₁₀, l'arylène en C₆ à C₁₀ est phénylène.

6. Procédé selon la revendication 1, lequel procédé est l'un quelconque des procédés suivants :
Procédé 1 : addition d'un isocyanate, d'un isothiocyanate, d'un cétène, d'un dimère d'un isocyanate, d'un dimère d'un isothiocyanate, ou d'un dimère d'un cétène goutte à goutte dans un mélange de phényléthylamine de fosfomycine et de trométhamine dans un solvant organique non-amine, et réaction ;
Procédé 2 : addition d'un isocyanate, d'un isothiocyanate, d'un cétène, d'un dimère d'un isocyanate, d'un dimère d'un isothiocyanate, ou d'un dimère d'un cétène goutte à goutte dans un mélange en suspension de bis-trométhamine de fosfomycine dans un solvant organique non-amine, et réaction.

7. Procédé selon l'une quelconque des revendications 1 à 6, dans lequel le solvant organique non-amine est un solvant alcoolique.

8. Procédé selon la revendication 7, dans lequel le solvant alcoolique est le méthanol et/ou l'éthanol.

9. Procédé selon l'une quelconque des revendications 1 à 6, dans lequel le rapport équivalent molaire de l'isocyanate, de l'isothiocyanate, du cétène, du dimère d'un isocyanate, du dimère d'un isothiocyanate, ou du dimère d'un cétène à la phényléthylamine de fosfomycine est de 0,9/1 à 2/1 ; le rapport molaire de la trométhamine à la phényléthylamine de fosfomycine est de 0,9/1 à 1,3/1.

10. Procédé selon la revendication 9, dans lequel le rapport équivalent molaire de l'isocyanate, de l'isothiocyanate, du cétène, du dimère d'un isocyanate, du dimère d'un isothiocyanate, ou du dimère d'un cétène à la phényléthylamine de fosfomycine est de 0,9/1 à 1,6/1 ; le rapport molaire de la trométhamine à la phényléthylamine de fosfomycine est de 0,95/1 à 1,2/1.

11. Procédé selon l'une quelconque des revendications 1 à 6, dans lequel le rapport équivalent molaire de l'isocyanate, de l'isothiocyanate, du cétène, du dimère d'un isocyanate, du dimère d'un isothiocyanate, ou du dimère d'un cétène à la bis-trométhamine de fosfomycine est de 0,9/1 à 2/1.

12. Procédé selon la revendication 11, dans lequel le rapport équivalent molaire de l'isocyanate, de l'isothiocyanate, du cétène, du dimère d'un isocyanate, du dimère d'un isothiocyanate, ou du dimère d'un cétène à la bis-trométhamine de fosfomycine est de 0,9/1 à 1,6/1.

13. Procédé selon l'une quelconque des revendications 1 à 6, dans lequel la température réactionnelle est de -5°C à 60°C.

14. Procédé selon la revendication 13, dans lequel la température réactionnelle est de -5°C à 40°C.

15. Procédé selon l'une quelconque des revendications 1 à 6, dans lequel, une fois la réaction terminée, un post-traitement est effectué comme suit :
concentration de la solution réactionnelle, évaporation pour éliminer le solvant, puis addition d'un autre solvant organique non-amine, refroidissement, filtration, lavage, séchage pour obtenir un produit pur ;
ou, si de l'éthanol est utilisé en tant que solvant lors de la réaction, il n'est pas nécessaire d'évaporer l'éthanol, le produit est obtenu directement par refroidissement de la solution réactionnelle, filtration, lavage et séchage.
